# EUROPEAN PATENT SPECIFICATION

(11) **EP 4 186 770 B1**
(45) Date of publication and mention of the grant of the patent: **09.04.2025**
(21) Application number: 21211422.7
(22) Date of filing: 30.11.2021
(51) Int. Cl.: B60W 60/00

(54) **METHOD FOR ESTIMATION OF AN OPERATIONAL DESIGN DOMAIN BOUNDARY, CORRESPONDING COMPUTER-READABLE STORAGE MEDIUM AND SYSTEM**
VERFAHREN ZUR SCHÄTZUNG EINER BETRIEBSENTWURFSBEREICHSGRENZE, KORRESPONDIERENDES COMPUTERLESBARES SPEICHERMEDIUM UND SYSTEM
PROCÉDÉ D'ESTIMATION DE LIMITE D'UN DOMAINE DE CONCEPTION OPÉRATIONNELLE, SUPPORT DE STOCKAGE LISIBLE PAR ORDINATEUR ET SYSTÈME CORRESPONDANT

(43) Date of publication of application: 31.05.2023
(73) Proprietor: Zenseact AB, 417 56 Göteborg (SE)
(72) Inventor: KHORSAND VAKILZADEH, Majid, 431 66 Mölndal (SE); FEI, Zhennan, 417 55 Göteborg (SE); FU, Junsheng, 449 35 Nödinge (SE)
(74) Representative: Zacco Sweden AB

(56) References cited:
- EP-A1- 2 915 718
- EP-A2- 3 287 334
- DE-A1- 102019 117 493
- US-A1- 2016 231 743
- US-B1- 10 732 627

## Description

### TECHNICAL FIELD

The present invention relates to Automated Driving Systems (ADS) for road vehicles such as cars, busses, and trucks. More specifically, the present invention relates to systems and methods for determining a dynamic Operational Design Domain (ODD) boundary for ADS-equipped vehicles.

### BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated to both the ADAS and the Autonomous Driving (AD) field. ADAS and AD will herein be referred to under the common term Automated Driving System (ADS) corresponding to all of the different levels of automation as for example defined by the SAE J3016 levels (0 - 5) of driving automation, and in particular for level 4 and 5.

In a not too distant future, ADS solutions are expected to have found their way into a majority of the new cars being put on the market. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

It is envisioned that during autonomous driving, an occupant of the vehicle will be able to devote himself at least partially to other activities. However, still today there are no available autonomous solutions that are fully capable of performing autonomous driving in all scenarios, and at all road sections. Accordingly, at least for the time being, the ADS needs to have capability to decide when it is available for activation, when it is feasible to remain active, and when the ADS should not be available for activation or should not remain active. In other words, there is a need for methods and systems capable of determining when the vehicle is within the ODD of a certain ADS feature and to control the availability or activation of that ADS feature accordingly.

Accordingly, for comfort and safety reasons, there is a need for solutions in the art that are capable of detecting the extension of an ADS feature's ODD in a robust and reliable manner.

EP 2 915 718 A1 discloses a method and an apparatus for continuously establishing a boundary for autonomous driving availability, in a vehicle having autonomous driving capabilities and comprising remote sensors for acquiring vehicle surrounding information and vehicle dynamics sensors for determining vehicle dynamics parameters, as well as a vehicle comprising such an apparatus. At least one of a positioning arrangement that provides map data with associated information, a route planning arrangement that enables route planning, a vehicle driver monitoring arrangement that provides driver monitoring information, and a real time information acquiring arrangement, that acquires at least one of traffic information and weather information. The boundary is calculated based on a planned route and at least one of vehicle surrounding information, vehicle dynamics parameters, driver monitoring information, map data, traffic information and weather information, for the planned route. Changes in the calculated boundary are output to a human machine interface arranged in the vehicle.

EP 3 287 334 A1 discloses an information processing apparatus capable of communicating with a vehicle includes a storage unit configured to store a location of an autonomous driving prohibition section on a map in association with a release condition set based on a traveling state of the vehicle, and a control unit configured to acquire the traveling state of the vehicle including the location of the vehicle on the map from the vehicle through communication, the control unit being configured to determine whether or not to release the autonomous driving prohibition section based on the acquired traveling state of the vehicle, the location of the autonomous driving prohibition section and the release condition of the autonomous driving prohibition section, the location and the release condition being stored in the storage unit.

US 10 732 627 B1 discloses a driver re-engagement system where, in a network of autonomous or semi-autonomous vehicles, an alert may be triggered when one of the vehicles switches from autonomous to manual mode. The alert may be communicated to nearby autonomous vehicles so that drivers of those vehicles may become aware of a potentially unpredictable manual driver nearby. Drivers of autonomous vehicles who may have become disengaged (e.g., sleeping, reading, talking, etc.) during autonomous driving may become re-engaged upon noticing the alert. A re-engaged driver may choose to switch his/her own vehicle from autonomous to manual mode in order to appropriately react to an unpredictable nearby manual driver. In additional or alternative embodiments, the alert may be triggered or intensified when indications of impairment of a nearby driver or malfunction of a nearby vehicle are detected.

US 2016/231743 A1 discloses a driver assistance system for a vehicle. The driver assistance system controls the vehicle at least partially automatically. In the method, the start of an auto pilot route section is determined in the course of a route planned for the vehicle. The driver assistance system is able to control the vehicle automatically along the autopilot route section. A distance between the current position of the vehicle and the start of the autopilot route section is determined and output in the vehicle.

### SUMMARY

It is therefore an object of the present invention to provide a control system, a vehicle comprising such a control system, a method, and a computer-readable storage medium, which alleviate all or at least some of the drawbacks of presently known solutions.

More specifically, it is an object of the present invention to alleviate problems related to automated driving systems in terms of operational design domains.

These objects are achieved by means of a control system, a vehicle comprising such a control system, a method, and a computer-readable storage medium, as defined in the appended claims. The term exemplary is in the present context to be understood as serving as an instance, example or illustration.

According to a first aspect of the present invention, there is provided a method comprising determining a fulfilment of a set of predefined Operational Design Domain (ODD) conditions for an Automated Driving System (ADS) feature of an ego-vehicle at least partly based on sensor data obtained from on-board sensors of the ego-vehicle. The method further comprises determining a first ODD exit boundary along an estimated route to be travelled by the ego-vehicle, wherein the first ODD exit boundary is determined at least partly based on one or more geo-spatially static elements along the estimated route. The method further comprises obtaining data from at least one external vehicle located on the estimated route to be travelled by the ego-vehicle, wherein the obtained data comprises information about one or more ADS state parameters of the at least one external vehicle. Still further, the method comprises evaluating the obtained data from the at least one external vehicle against an ODD assessment scheme in order to determine a fulfilment of the predefined ODD conditions in the surrounding environment of the external vehicle. Moreover, the method comprises determining a second ODD exit boundary along the estimated route of the ego-vehicle based on the evaluation and controlling the ADS feature based on the determined second ODD exit boundary. Further, if the evaluation indicates that the one or more ADS state parameters of the at least one external vehicle indicate that ADS is inactive and unavailable for activation for the at least one external vehicle, the step of determining the second ODD exit boundary along the estimated route of the ego-vehicle comprises at least one of determining the second ODD exit boundary along the estimated route of the ego-vehicle based on sensor data obtained from on-board sensors of the ego-vehicle, wherein the sensor data obtained from on-board sensors may comprise information about quasi-stationary elements and dynamic elements in the surrounding area of the vehicle, and determining the second ODD exit boundary along the estimated route of the ego-vehicle based on the evaluation of the obtained data from the at least one external vehicle against the ODD assessment scheme. In other words, if the evaluation indicates that the one or more ADS state parameters of the at least one external vehicle indicate that ADS is inactive and unavailable for activation for the at least one external vehicle the second ODD exit boundary is either be determined by means of the ego-vehicle's own sensor data or by utilizing the sensor data from one or more external vehicles located on the estimated route. In the latter case, it is assumed that the obtained data from the one or more external vehicles further comprises information about one or more ODD parameters in a surrounding environment of the at least one external vehicle.

According to an exemplary embodiment of the present invention the obtained data may comprise information about one or more ODD parameters in the surrounding environment of the at least one external vehicle and the second ODD exit boundary may be the same as the first ODD exit boundary if the evaluation indicates that the set of predefined ODD conditions are fulfilled in the surrounding environment of the external vehicle.

In yet another embodiment, the second ODD exit boundary may be different from the first ODD exit boundary if the evaluation indicates that the set of predefined ODD conditions are not fulfilled in the surrounding environment of the external vehicle.

It is accordingly advantageous to have an accurate estimation of the ODD exit boundary which ensures that the AD mode activation or remaining active will not be available when it is determined that the ego-vehicle needs to send a takeover signal to an occupant of the vehicle and/or when the vehicle is required to trigger a minimal-risk maneuverer condition immediately due to an approaching ODD exit. Therefore, for comfort and safety reasons, the proposed solution guarantees that the ego-vehicle is far away from the closest ODD exit to a sufficient degree at the time of AD mode activation, and remaining active. The present inventors thus have realized that it is advantageous to enable the ADS of the ego-vehicle to reliably estimate the distance and/or time of travel to an ODD exit on the road while considering all the external ODD conditions including the geo-spatially stationary elements, quasi-stationary elements, and dynamic elements along a route of the ego-vehicle.

In other further embodiments of the present invention, the second ODD exit boundary may be determined to be the same as the first ODD exit boundary if the evaluation indicates that the one or more ADS state parameters of the at least one external vehicle indicate that ADS is active or available for activation for the at least one external vehicle.

In some other embodiments, the method may further comprise determining at least one of a distance between the ego-vehicle and the secondary ODD exit boundary, and a time of travel of the ego-vehicle to the secondary ODD exit boundary. Thus, if the determined distance or if the time of travel may exceed i.e. is greater than a respective predefined threshold distance or a respective predefined threshold time, the step of controlling the ADS feature may comprise making the ADS feature available for activation or activating the ADS feature. Yet further, in some embodiments, if the determined distance or if the time of travel does not exceed i.e. is smaller than the respective predefined threshold distance or the respective predefined threshold time, the step of controlling the ADS feature may comprise making the ADS feature unavailable for activation or initiating a de-activation process of the ADS feature.

According to yet second aspect of the present invention there is provided a (non-transitory) computer-readable storage medium storing one or more programs configured to be executed by one or more processors of a processing system, the one or more programs comprising instructions for performing the method according to any one of the embodiments of the method of the present invention.

The distributed process of the present invention for determining the ODD exit boundary along the travel route of the ego-vehicle by involving the other external vehicles and employing the obtained data from the external vehicles which comprises quasi-stationary elements, and dynamic elements of the surrounding environment of these vehicles on the road, enables a more efficient way to detect the ODD exit boundary. Thus, a higher degree of certainty is achieved when making decisions by the ADS of the ego-vehicle for activation, deactivations and remaining active status of the AD modes and features along the travel route of the ego-vehicle leading to further the traffic safety and comfort for the occupants and other road travelers.

According to a further third aspect, there is provided a system comprising control circuitry configured to determine a fulfilment of a set of predefined Operational Design Domain (ODD) conditions for an Automated Driving System (ADS) feature of an ego-vehicle at least partly based on sensor data obtained from on-board sensors of the ego-vehicle. The control circuitry further configured to determine a first ODD exit boundary along an estimated route to be travelled by the ego-vehicle, wherein the first ODD exit boundary is determined at least partly based on one or more geo-spatially static elements along the estimated route. The control circuitry further configured to obtain data from at least one external vehicle located on the estimated route to be travelled by the ego-vehicle, wherein the obtained data comprises information about one or more ADS state parameters of the at least one external vehicle. Still further, the control circuitry is configured to evaluate the obtained data from the at least one external vehicle against an ODD assessment scheme in order to determine a fulfilment of the predefined ODD conditions in the surrounding environment of the external vehicle. Moreover, the control circuitry is configured to determine a second ODD exit boundary along the estimated route of the ego-vehicle based on the evaluation and control the ADS feature based on the determined second ODD exit boundary. Further, if the evaluation indicates that the one or more ADS state parameters of the at least one external vehicle indicate that ADS is inactive and unavailable for activation for the at least one external vehicle, the step of determining the second ODD exit boundary along the estimated route of the ego-vehicle comprises at least one of determining the second ODD exit boundary along the estimated route of the ego-vehicle based on sensor data obtained from on-board sensors of the ego-vehicle, wherein the sensor data obtained from on-board sensors may comprise information about quasi-stationary elements and dynamic elements in the surrounding area of the vehicle, and determining the second ODD exit boundary along the estimated route of the ego-vehicle based on the evaluation of the obtained data from the at least one external vehicle against the ODD assessment scheme. In other words, if the evaluation indicates that the one or more ADS state parameters of the at least one external vehicle indicate that ADS is inactive and unavailable for activation for the at least one external vehicle the second ODD exit boundary is either be determined by means of the ego-vehicle's own sensor data or by utilizing the sensor data from one or more external vehicles located on the estimated route. In the latter case, it is assumed that the obtained data from the one or more external vehicles further comprises information about one or more ODD parameters in a surrounding environment of the at least one external vehicle.

According to yet another fourth aspect, there is provided a vehicle comprising an ADS feature for controlling one or more of acceleration, steering, and braking of the vehicle, wherein the ADS feature is associated with an ODD. The vehicle further comprises one or more on-board sensors for monitoring a surrounding environment of the vehicle and a communication system for receiving data from an external source. The vehicle further comprises a system according to the various embodiments of the system of the present invention.

Further embodiments of the different aspects are defined in the dependent claims.

It is to be noted that all the embodiments, elements, features and advantages associated with the first aspect also analogously apply to the second, third and the fourth aspects of the present invention.

These and other features and advantages of the present invention will in the following be further clarified in the following detailed description.

### BRIEF DESCRIPTION OF THE DRAWINGS

Further objects, features and advantages of embodiments of the invention will appear from the following detailed description, reference being made to the accompanying drawings. The drawings are not to scale.
Figs. 1a-1b are schematic perspective view illustrations of a vehicle comprising a control system in accordance with several embodiments of the present invention.
Figs. 2a-2b are schematic block diagrams illustrating embodiments of a method of the present invention.
Figs. 3a-3b are schematic perspective view illustrations of the vehicle comprising the control system in accordance with several other embodiments of the present invention.
Fig. 4 is a schematic flow chart illustrating a method in accordance with several embodiments of the present invention.
Fig. 5 is a schematic side view illustration of the vehicle comprising the control system in accordance with an embodiment of the present invention.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present invention is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

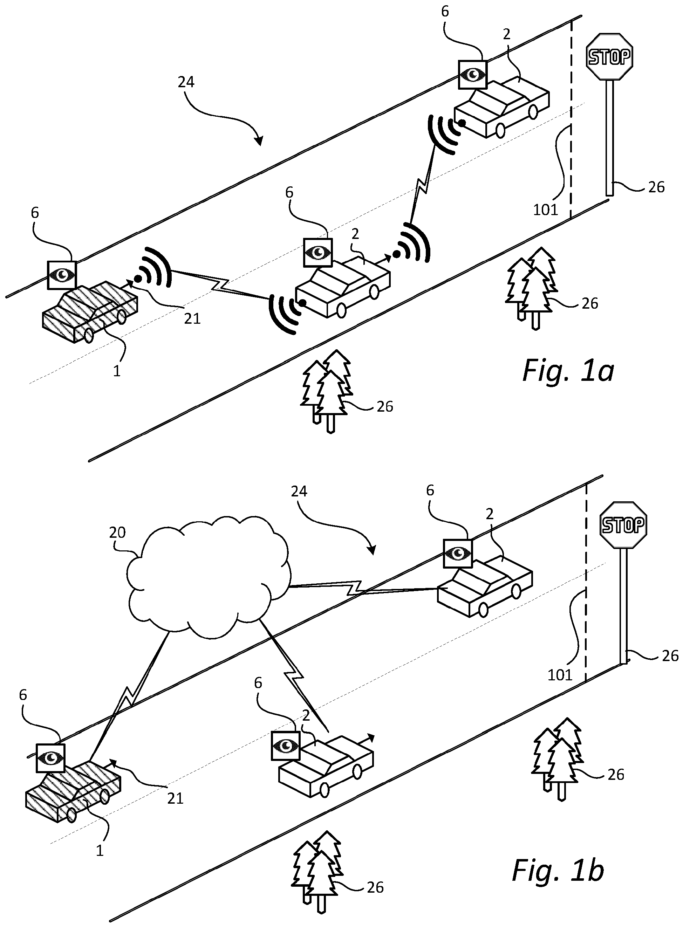

Fig. 1a and Fig. 1b illustrate schematic perspective views of a vehicle 1. The vehicle 1 may also be referred to as the ego-vehicle. Vehicle 1 in Fig. 1a and Fig. 1b is shown as the shaded hatched vehicle. The vehicle 1 comprises a control system (control circuitry) for controlling a driver support function for autonomously maneuvering the vehicle 1 according to several embodiments and aspects of the present invention. The control system of the vehicle 1 comprises control circuitry configured to obtain data comprising information about the surrounding environment of the vehicle 1. Fig. 1a shows the ego-vehicle travelling on a segment 24 of a road in the illustrated direction 21. In this example, the road is in the form of a carriage way having two lanes, and the road segment 24 is a portion of the carriage way. In several other examples and embodiments the road may be any other type of road e.g. a highway with dual carriageways where oncoming traffic is enabled to travel in an opposite direction to the direction 21. The road may also be a motorway, freeway or expressway. The road may also be a country road or any other carriageway with one or more lanes wherein the vehicle 1 will be travelling on.

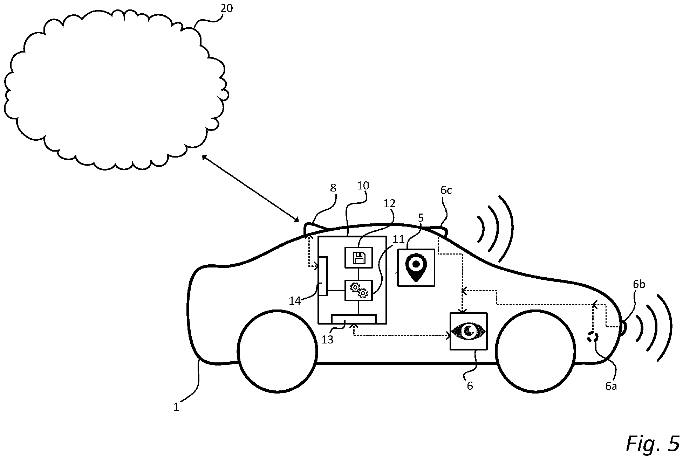

In addition to vehicle 1, there are two other vehicles 2, also referred to as at least one external vehicle 2, travelling on a segment of the same road. The segment on which the at least one external vehicle 2 is travelling in Fig. 1a in the same segment 24 of the same road. The at least one other external vehicle 2 in this example are also travelling in the same direction 21 as the ego-vehicle, either in a same lane as the ego-vehicle or in adjacent lanes to the lane of the ego-vehicle 1. However, it is readily understood and appreciated by the skilled person in the art that in other examples and embodiments, the at least one external vehicle 2 may be travelling on a different segment of the same road, on an intersecting road, or on an opposite direction to the direction of travel of the vehicle 1 e.g. as an oncoming traffic on a highway with dual carriageways separated by road safety barriers. The vehicle 1 and the at least one external vehicle 2 comprise sensing capabilities e.g. at least one on-board sensor device which may be a part of a vehicle perception system 6 comprising sensor devices 6a-6c such as the ones shown in the vehicle of Fig. 5.

The vehicle 1 is provided with a driver support function, which in the present context may be understood as an Autonomous Driving (AD) feature or an Advanced Driver Assistance Feature (ADAS), both of which are herein encompassed under the term an Automated Driving System (ADS) feature. The ADS feature may for example be a "highway pilot" feature or a "traffic jam pilot" feature. The ego-vehicle 1 is also provided with means for wireless communication compatible with various short-range or long-range wireless communication protocols as further explained with reference to Fig. 5. Further, the at least one external vehicle 2, in the example of Fig. 1a and Fig. 1b are depicted as other passenger motor vehicles which may also comprise ADS features and communication means enabling wireless communication features for the at least one external vehicle 2. However, the at least one external vehicle may in some other embodiments be any other kind of vehicle comprising sensing capabilities and travelling on the estimated route of the ego-vehicle 1. For instance, motorcycles, cargo trucks, busses, smart bicycles, autonomous driving delivery vehicles, etc. can also be conceived as the at least one external vehicle 2.

The driver support function of the vehicle 1 is capable of operating within a specific Operating Design Domain (ODD). An ODD is to be understood as a description of the operating domains in which an automated or a semi-automated driving system (i.e. AD or ADAS) is designed to function, including, but not limited to, geographic, roadway (e.g. type, surface, geometry, edges and markings), environmental conditions, connectivity, surrounding objects, and speed limitations. Thus, the ODD of the driver support function defines a set of requirements that must be fulfilled if the driver support function is to be able to operate. In several embodiments and aspects the ODD includes geo-spatially stationary elements, quasi-stationary elements, and dynamic elements which are considered the three main categories when classifying the ODD conditions relating to the external and surrounding environment of the ego-vehicle 1. In addition to external ODD conditions, the internal ODD conditions are those for the ego-vehicle 1 itself, such as ego-vehicle conditions, or ADS health (e.g. fully functional or limited functionality due to momentary software/hardware errors) of the ego-vehicle 1. The internal ODD conditions can be checked e.g. by onboard sensors and appropriate software/hardware modules of the ego-vehicle 1.

When it comes to controlling the driver support functions of the vehicle 1, the control circuitry may comprise several software and/or hardware components or modules e.g. a mode manager of the ADS, which has the responsibilities for deciding when an ADS feature (may also be referred to as "AD mode") is available for activation, when it is feasible for the ADS features to remain active and when ADS feature shouldn't remain active which may be followed by requesting a driver of the vehicle 1 to take over or decide for the vehicle 1 to perform a Minimum Risk Condition (MRC) manoeuvre e.g. pullover automatically. To make such critical decisions correctly, the mode manager not only checks if the vehicle 1 is currently within the defined ODD conditions, but it also estimates when the ego-vehicle 1 may leave its defined ODD in the estimated route. The term "estimated route" as used herein may refer to a planned or predefined route obtained from a navigation system/model of the ego-vehicle or estimated from a current position and heading of the vehicle together with map data (e.g. HD-map data).

Having an accurate estimation of the ODD boundary, also referred to as ODD exit or ODD exit boundary, ensures that the mode manager does not allow the ADS feature activation or availability of the ADS feature due to an approaching ODD exit i.e. departure from the within the ODD conditions. The control circuitry e.g. the mode manager is thus configured to determine a fulfilment of a set of predefined ODD conditions for the ADS feature of the ego-vehicle 1 at least partly based on sensor data obtained from the on-board sensors of the ego-vehicle and determine a first ODD exit boundary along the estimated route to be travelled by the ego-vehicle, wherein the first ODD exit boundary is determined at least partly based on one or more geo-spatially static elements 26 along the estimated route.

Note that the mode manager of the ADS checks the "within ODD conditions" at the current location of the ego vehicle. It also checks conditions where the ADS feature should not be active or available for activation, herein referred to as ,"NotOKToRemainActive" conditions. It should be noted that the "NotOKToRemainActive" conditions are to be understood as the inverse of "OKToRemainActive" conditions, which may be applied in an analogous manner. This way the mode manager of the ADS can estimate its distance from and/or time to reach the closest ODD exit in the estimated route. In the functional architecture, an ODD manager, which, in some embodiments may be construed as a sub-component of the mode manager, is responsible for checking ODD-related conditions and communicating its outputs to the mode manager. According to functional requirements of the ODD manager, the external ODD conditions, i.e., those related to the surrounding environment, fall into three main categories as mentioned earlier: geo-spatially stationary elements, quasi-stationary elements, and dynamic elements. In several aspects and embodiments the geo-spatially stationary elements 26 comprise static road-side objects, traffic signs, road-side barriers, road-separation safety barriers, trees, number of lanes, speed limits, lane mergers and lane markings, and the like. Accordingly in several embodiments and aspects the quasi-stationary elements include the ambient temperature, road friction, detected roadworks, detected accidents or incidents, precipitation, illuminance and the like. The dynamic elements may comprise the status, location and speed of other vehicles travelling on the same road, relative velocity of the ego-vehicle relative to the other external vehicles travelling on the adjacent lanes, vulnerable road users (VRUs) such as motorcyclists and pedestrians on the road, large animals on the road, emergency vehicles, an oncoming external vehicle on the same road i.e. driving in the wrong direction, non-static road-side objects and the like. Hence, the ODD manager checks and determines a fulfilment of a set of predefined ODD conditions including the geo-spatially stationary elements, quasi-stationary elements, and dynamic elements for the ADS feature of the ego-vehicle 1 at least partly based on sensor data obtained from on-board sensors 6a-6c of the ego-vehicle 1. This way the ODD manager can verify the within the ODD conditions for the vehicle 1. In addition, the ODD manager checks and determines a first ODD exit boundary along the estimated route to be travelled by the ego-vehicle 1, wherein the first ODD exit boundary is determined at least partly based on one or more geo-spatially static elements 26 along the estimated route e.g. the segment 24 of the road on which the vehicle 1 is travelling. This way the ODD manager can determine the "NotOKToRemainActive" conditions and the mode manager of the ADS can estimate its distance from and/or time to reach the first ODD exit in the planned route. Therefore, the mode manager determines that the ego-vehicle 1 is away from the first ODD exit to a sufficient degree at the time of ADS feature activation, being available for activation or remaining active.

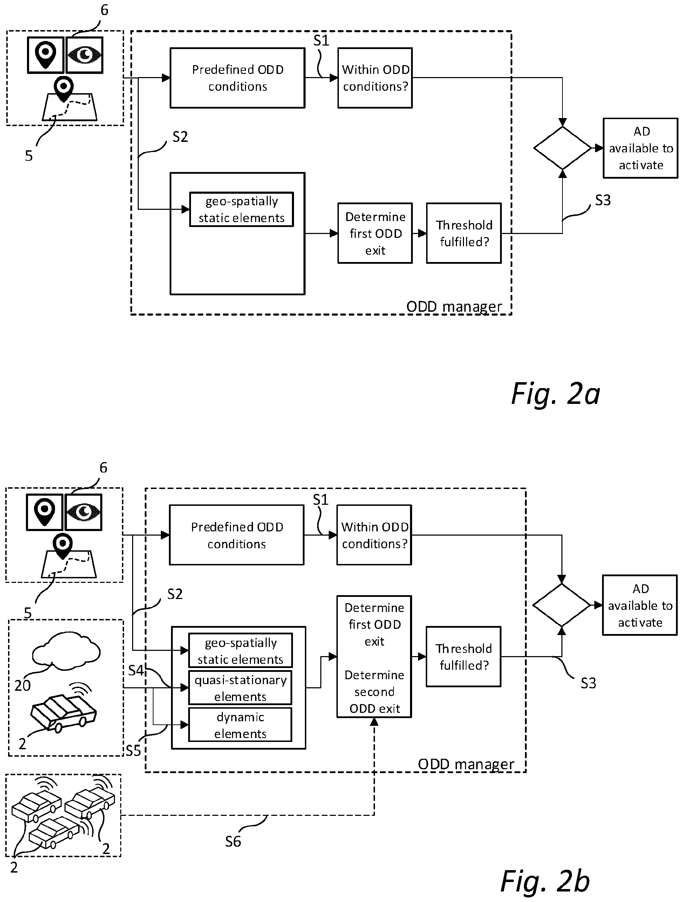

At the time of activation of ADS feature, from comfort and safety perspectives, it is advantageous that the distance and/or time to the ODD exit is larger than a threshold set by functional requirements of the ADS. When the geo-spatially stationary elements form the basis for such estimations, the onboard sensing capabilities of the ego-vehicle are used to confirm the within ODD condition as well as estimation of distance and/or time to the ODD exit. The confirmation of within the ODD conditions and also estimation of the distance and/or time to the ODD exit may additionally be based on HD-map data, weather forecasts, and the like. For example, the ODD manager may use a vehicle localization module 5 of the ego-vehicle 1 to locate the ego-vehicle 1 in the HD map to estimate the distance and/or time of travel of the vehicle to the first ODD exit. If the estimated distance and/or time of travel is within the acceptable boundaries of the threshold (i.e. exceeding the predefined threshold) set by functional requirements of the ADS, then ADS feature can be considered available for activation. This is depicted in the block diagram of Fig. 2a wherein the ODD manager determines, S1, the fulfillment of the predefined ODD conditions at the location of the vehicle 1, taking into account the three main categories of the external ODD conditions. Further, the ODD manager determines, S2, the first ODD exit by estimating the "NotOKToRemainActive" conditions based on the geo-spatially static elements only. Thus, the mode manager of the ADS can estimate its distance from and/or time to reach the closest ODD exit in the estimated route. If the estimated distance and/or time to the ODD exit is equal to or larger than the predefined threshold, S3, then the ADS feature is determined to be available for activation or to remain active.

The inventors have however realized that employing the geo-static data alone to estimate the ODD exit boundary has limitations and hence, some comfort and safety issues remain to be solved. For instance, based on the determination S1, S2, S3 of the first ODD exit boundary, the ADS feature might still be available when arriving at a region or segment of the road with heavy precipitation whereas functional requirements demand the deactivation of the ADS feature under these conditions. Since the quasi-stationary and/or dynamic elements of the ODD, in this case the heavy precipitation, have not been taken into account an unsafe or at least an uncertain situation may occur for the ego-vehicle 1.

Thus, the inventors propose solutions according to the inventive method, system and the vehicle of this invention which enable the control system of the ego-vehicle 1 to more reliably estimate the ODD exit boundary as well as the distance of the ego-vehicle 1 from and/or the time of travel of the ego-vehicle 1 to the ODD exit considering all the external ODD condition categories. Thus, the mode manager of the ADS will decide more reliably on activation, deactivation and/or remain active status of the ADS feature based on more accurate determination of the ODD exit boundary.

Fig. 2b illustrates an example according to several aspects and embodiments of the present invention wherein the ego-vehicle 1 is enabled to check and determine the dynamic and quasi-static elements on its estimated travel route by communicating to at least one external vehicle(s) 2 travelling (either currently travelling or has been travelling) on the same road as the ego-vehicle 1 and/or by querying data associated with the at least one external vehicle 2 from e.g. a cloud network 20. This approach allows the ego-vehicle 1 to more reliably estimate the ODD exit in its estimated route. Therefore, in addition to S1, and S2, the ODD manager obtains, S4, S5, data from the at least one external vehicle 2 located on the estimated route to be travelled by the ego-vehicle 1, wherein the obtained data comprises information about one or more ADS state parameters of the at least one external vehicle 2, and optionally, information about one or more ODD parameters in a surrounding environment of the at least one external vehicle 2. The data may be obtained directly from the at least one external vehicle by vehicle to vehicle (V2V) communication when the at least one external vehicle is within range of direct V2V communication as shown in Fig. 1a. The data can additionally or alternatively be obtained indirectly from the at least one external vehicle 2 via the external network i.e. the cloud network 20 as shown in Fig. 1b, wherein the at least one external vehicle 2 transmits the data to the cloud network making it available for retrieval even after the external vehicle 2 may have left the segment 24 of the road. In some embodiments the data may be obtained partly via the V2V communication and partly via the cloud network. The mode manager of the ADS of the ego-vehicle 1, acquires data of the quasi-stationary and/or dynamic elements in the surrounding environment of the at least one external vehicle 2 e.g. gathered by the onboard sensor systems of the at least one external vehicle 2.

It should be noted that the term "located" in the phrase "at least one external vehicle 2 located on the estimated route to be travelled by the ego-vehicle 1" should be interpreted as "is located or has been located" on the estimated route. In reference to the latter, there may be a scenario where the external vehicle reports an earlier passage along at least a part of the estimated route to be travelled by the vehicle, and where the external vehicle noticed an incident (e.g. accident or a wild animal crossing the road) during that earlier passage. This information about the noticed incident is then valid until another external vehicle reports that there is "no incident noticed" on the same part of the estimated route. Furthermore, the obtained data comprising "information about one or more ODD parameters in a surrounding environment of the at least one external vehicle" should be understood as that the referred to "surrounding environment" pertains to one or more points in time or periods of time while the external vehicle(s) was/were located on the estimated route. Analogously, the "information about the one or more ADS parameters of the at least one external vehicle" should be understood as that the referred to ADS state parameters pertains to the ADS state parameters of the external vehicle(s) while the external vehicle(s) was/were located on the estimated route.

The obtained data can then be used to be evaluated against an ODD assessment scheme in order to determine a fulfilment of the predefined ODD conditions in the surrounding environment of the external vehicles. In other words, the ODD manager of the ego-vehicle determines if the within ODD conditions are fulfilled for the surroundings of the at least one external vehicle 2. The ODD assessment scheme comprises the predefined ODD conditions e.g. the three main categories for the external ODD conditions and their predefined ranges and/or values. The ODD assessment scheme may additionally or alternatively comprise rules associated with the status of availability of an ADS of the at least one external vehicle. The ODD assessment scheme may in various embodiments comprise both the predefined ODD conditions and the rules regarding the status of the ADS of the at least one external vehicle.

The acquired ODD parameters from the at least one external vehicle are compared with and assessed against the predefined ODD conditions to determine the fulfilment of the predefined ODD conditions. Additionally, the ODD manager of the ADS of the ego-vehicle 1 is further configured to determine a second ODD exit boundary along the estimated route of the ego-vehicle 1 based on the above evaluation. With the inventive solution of the present invention, the range of the ego-vehicle to assess the quasi-stationary and dynamic elements along the route of travel of the ego-vehicle is considerably extended by using the at least one external vehicle's sensing capabilities and gathered information about the road far ahead of the current location of the ego-vehicle on the road. Based on the obtained data and the determined second ODD exit boundary, the ego-vehicle controls the ADS feature(s) and decides if the ADS feature(s) should be or should not be available for activation or remaining active. In other words, the second ODD exit boundary defines a "true" ODD exit boundary that the ADS acts upon. In some embodiments, the second ODD exit boundary is used to update or verify the determined first ODD exit boundary. Thus, the second ODD exit boundary may be used to update (i.e. replace) the first ODD exit boundary or to verify that the determined first ODD exit boundary is the "true" ODD exit boundary.

It is to be appreciated that in some scenarios the onboard sensors of the ego-vehicle determine if dynamic and quasi-static elements of the "within ODD conditions" and/or "NotOkToRemainActive" conditions in the current location of the ego-vehicle i.e. within the range of the sensing devices of the ego-vehicle are met. Further, the ego-vehicle may receive additional information regarding the dynamic and/or quasi-static elements e.g. the weather forecast information along the road to estimate when the precipitation conditions are violated. If the onboard sensors and/or the additional information determine that the "NotOkToRemainActive" conditions are met and thus the associated ADS features are prevented from remaining active or being available for activation within the range of onboard sensors, then the associated ADS features shall not be available. In these scenarios and examples, when the onboard sensors of the ego-vehicle 1 already indicate that one or more ADS features should not be available within the range of the onboard sensors, then the mode manager of the ego-vehicle 1 will, in some embodiments, not make the one or more ADS features available without attempting to obtain data from the at least one external vehicle 2.

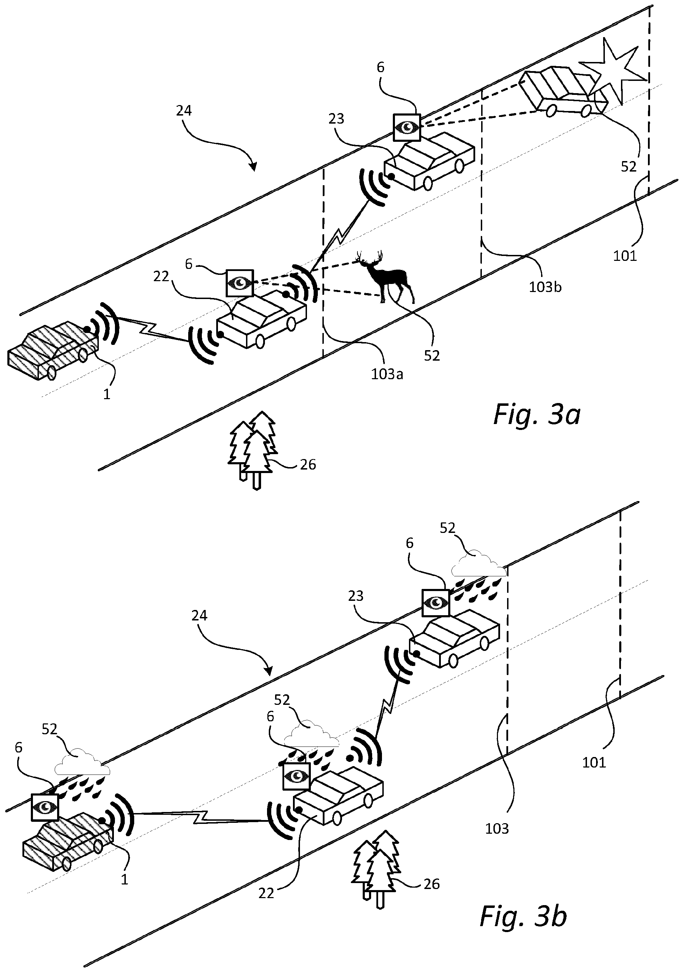

Fig. 3a and Fig. 3b, illustrate the vehicle 1 of Figs. 1a and 1b in example scenarios according to several embodiments of the present invention. In Fig. 3a, the ego-vehicle 1 has determined a first ODD exit boundary 101 as explained with reference to Fig. 2a and Fig. 2b. The ego-vehicle 1 further obtains the data from the at least one external vehicle 2 which is closest to and ahead of the ego-vehicle travelling on the same segment 24 of the road. This external vehicle 2 may also be referred to as the lead vehicle 22 or immediate lead vehicle 22. Starting from the immediate lead vehicle 22, the ego-vehicle 1 attempts to ensure that the environment surrounded by the lead vehicle 22 fulfills the predefined ODD conditions. For example, if the lead vehicle 22 detects a quasi-stationary and/or dynamic elements such as an incident 52 or accident 52 on the road in the vicinity of itself, the ODD manager determines, based on evaluating the obtained data from the external lead vehicle 22 against the ODD assessment scheme, that the predefined ODD conditions for ADS in the surrounding environment of the lead vehicle 22 are not fulfilled. In other words, the "NotOKToRemainActive" conditions are fulfilled in the vicinity of the external lead vehicle 22.

Therefore, the ODD manager will determine that the second ODD exit boundary 103a is different from the first ODD exit boundary 101 since the evaluation indicates that the set of predefined ODD conditions are not fulfilled in the surrounding environment of the lead vehicle 22. In this case the first ODD exit should be updated to the second ODD exit boundary 103a i.e. to the location of the lead vehicle 22 on the segment 24 of the road or to the reported location of the incident 52 or accident 52. If the lead vehicle 22 is within the range of V2V communication, a customized query e.g., containing a request to check the dynamic elements is transmitted to the lead vehicle 22. In other embodiments, such query can be routed by using the cloud 20 as shown in Fig. 1b. In several embodiment, the query to obtain data from the external vehicles 2, 22, may include a query regarding one or more ODD parameters. In some embodiments, only one specific ODD parameter such as a specific dynamic or quasi-stationary element and/or one specific category of parameters may be of interest based on functional requirements of the ADS, and be inquired from the external vehicle 2, 22.

However, in some other aspects and embodiments, the evaluation may indicate that the set of predefined ODD conditions are fulfilled in the surrounding environment of the external vehicle 2, 22. Therefore, the ODD manager for the ADS determines that the second ODD exit boundary is the same as the first ODD exit boundary. In other words, the ODD manager does not update/replace the first ODD exit boundary and thus the ADS feature may be available for activation or may remain active if it was already activated. Stated differently, the determination of the second ODD exit boundary "verifies" the determined first ODD exit boundary as the "true" ODD exit boundary. The process of obtaining data, either directly from the external vehicles 2, 22 or from the cloud network as well as determination of the ODD exit boundary is an iterative process for both the external vehicles and the elements of the ODD conditions. This means that, if for instance the second ODD exit boundary remains the same as the first ODD exit boundary (i.e. the first ODD exit boundary is determined via the determination of the second ODD exit boundary) based on an evaluation of data obtained from the immediate lead vehicle 22, the ego-vehicle 1 will continue the inquiry process by communicating with and obtaining data from other external vehicles 2 present and travelling on the same estimated route.

For example, the ego-vehicle may obtain data from the next lead vehicle 23 (i.e., the lead vehicle 23 of the immediate lead vehicle 22) and check the same or other dynamic and/or quasi-stationary elements and possibly update the first ODD exit 101 to another second ODD exit 103b if the ODD parameters do not fulfill the predefined ODD conditions in the surrounding environment of the next lead vehicle 23 or in other words if the ODD parameters meet the "NotOkToRemainActive" condition. Based on this evaluation, the ADS features may be set to not available to be activated or not to remain active or be deactivated. Via V2V communication, the query can be transmitted to and received from the next lead vehicle 23 via the immediate lead vehicle 22 i.e. the ego-vehicle 1 transmits and receives the request and the associated data to the immediate lead vehicle 22, whereas the immediate lead vehicle 22 transmits and receives the request and the associated data to the next lead vehicle 23 as an intermediary. The end data of the next lead vehicle 23 is propagated back to the ego-vehicle 1 via the immediate lead vehicle 22. Alternatively, the cloud can be used to send the query and obtain the data. As mentioned earlier, any combination of V2V communication and cloud inquiry is also conceivable. The above iterative procedure continues until the last vehicle before the first ODD exit boundary which was set based on the geo-spatially stationary elements. In other embodiments and aspects the above procedure can be performed for additional or alternative dynamic and quasi-static elements and the second ODD exit is determined accordingly.

In Fig. 3b yet another example according to several embodiments and aspects is depicted. In this example the ODD parameter which is inquired by the ego-vehicle 1 is the precipitation status 52 on the planned route of the ego-vehicle 1. In this example the ego-vehicle 1 has similarly defined a first ODD exit boundary 101. However, the ego-vehicle 1 firstly employs its onboard sensors 6a-6c to determine if dynamic and quasi-static elements of the "within ODD conditions" in the current location of the ego-vehicle i.e. within the range of the sensing devices of the ego-vehicle are met. Assume that the "within the ODD conditions" for the precipitation parameter is that the precipitation should be less than 2mm/hour for the past 10 seconds as well as no snowfall or hail. If the onboard sensors indicate that this condition is met then the AD feature may be active or available for activation in other words "OkToActivate" condition is met (i.e. "within ODD conditions"). Assume that the "NotOkToRemainActive" conditions for the precipitation parameter is if the rainfall exceeds 10mm/hour and lasts for at least 30 seconds. In this case the ego-vehicle 1 has had its ADS features active when the "NotOkToRemainActive" conditions for the precipitation occur. The ego-vehicle 1 communicates with the external lead vehicle 22 and/or the next lead vehicle 23 and other external vehicles 2 on the estimated route.

Based on the current velocity of the ego-vehicle 1, the communication is executed with the external vehicles which are within the approximately 30-second time of travel for the ego-vehicle 1 i.e. the 30-second time variable of the "NotOkToRemainActive" conditions. The sensor data on precipitation is then obtained from the external vehicles 2, 22, 23. In other words, the ego-vehicle checks with the external vehicles 2, 22, 23 which are travelling up to 30 seconds ahead of the vehicle 1 on the road, if each or either of them reports the 10 mm/hour conditions in their surrounding environment. If the evaluation of the obtained data against the ODD assessment scheme indicates that the external vehicles 2, 22, 23 report the "NotOkToRemainActive" conditions for the precipitation parameter in their vicinity, then the ego-vehicle 1 determines that the predetermined ODD conditions are not fulfilled and thus the second ODD exit 103 is determined to be different form the first ODD exit 101. It is further determined that the AD features should not be available for activation or to be deactivated in this example. Evidently, the above parameters (10mm/hour and 30-second time variable) and how the ego-vehicle 1 uses these parameters to evaluate the fulfillment of the "NotOkToRemainActive" conditions are only examples to further elucidate the method and system of the present invention. Other parameters, and examples are thus readily conceivable for the skilled person.

According to the invention the obtained data from the at least one external vehicle 2, 22, 23 comprises information about one or more ADS state parameters of the at least one external vehicle 2, 22, 23. In other words, the ego-vehicle 1 checks, S6, if there are any active or available to be activated ADSs along the estimated route of the ego-vehicle 1 e.g. as shown in Fig. 2b. Presence of an active or available to be activated ADS along the estimated route may indicate that the "within ODD conditions" are fulfilled from the perspective of the other external vehicles 2, 22, 23 and, thus, can also be considered to be fulfilled for the ego-vehicle 1 along the estimated route. Thus, the second ODD exit boundary will be determined by the ODD manager to be the same as the first ODD exit boundary if the evaluation indicates that the one or more ADS state parameters of the at least one external vehicle 2, 22, 23 indicate that ADS is active or available for activation for the at least one external vehicle. In some embodiments, the ego-vehicle 1 may use the obtained data from the at least one external vehicle comprising both the information about one or more ODD parameters in the surrounding environment of the at least one external vehicle as well as the information about one or more ADS state parameters of the at least one external vehicle 2, 22, 23.

Further, if the evaluation indicates that the one or more ADS state parameters of the at least one external vehicle 2, 22, 23 indicate that ADS is inactive and unavailable for activation for the at least one external vehicle, the step of determining the second ODD exit boundary along the estimated route of the ego-vehicle 1 comprises determining the second ODD exit boundary along the estimated route of the ego-vehicle 1 based on sensor data obtained from on-board sensors 6a-6c of the ego-vehicle, wherein the sensor data obtained from on-board sensors comprises information about quasi-stationary elements and dynamic elements in the surrounding area of the ego-vehicle 1. The ODD manager may alternatively be configured to determine the second ODD exit boundary along the estimated route of the ego-vehicle 1 based on the evaluation of the obtained data from the at least one external vehicle 2, 22, 23 against the ODD assessment scheme. In other words, if the ego-vehicle cannot detect any active ADS along the estimated route, it will rely on data from its onboard sensors to check the "within ODD conditions", or it will inquire and obtain data from the at least one external vehicle 2, 22, 23 as explained earlier in detail with reference to Figs. 1-3. Considering that the ego-vehicle 1 relies on the status of the ADS of the at least one external vehicle 2, 22, 23, to confirm the "within ODD conditions", the ego-vehicle may inquire from the at least one external vehicle 2, 22, 23 information regarding the original equipment manufacturer (OEM), the year model, type and/or version of the operating system (OS) of the external vehicle, the set of predefined ODD conditions as defined for the at least one external vehicle as well as the ranges and/or values thereof. Such information are then taken into account by the ego-vehicle 1 when relying on the obtained data from the at least one external vehicle. Such information may also be inquired and obtained from the at least one external vehicle 2, 22, 23 even when the obtained data comprises the set of ODD parameters in the surrounding environment of the at least one external vehicle 2, 22, 23. In some aspects and embodiments, the ego-vehicle may also query the external vehicles 2, 22, 23 (either directly or via a cloud network) about the external vehicle's estimated ODD exit. The external vehicles 2, 22, 23 may accordingly transmit ODD exit data indicative of an estimated location of the respective ODD exit boundary or an estimated distance to the ODD exit boundary from the respective external vehicle 2, 22, 23. Thus, in some embodiments, the obtained ODD parameters may be a position or location of an ODD exit boundary as estimated by one or more external vehicles, and/or a distance to an ODD exit boundary as estimated by one or more external vehicles. This data may accordingly be used to update the estimation for the distance and/or time of travel to the ODD exit for the ego-vehicle. As before, the ODD parameters in the form of direct ODD exit boundary estimations may be received directly from an external vehicle via a V2V protocol, or indirectly via a cloud network. Also, the ODD parameters need not be obtained in response to a query from the ego-vehicle, but may in some embodiments be broadcasted or otherwise obtained by the ego-vehicle without any query/request being transmitted by the ego-vehicle beforehand.

Such a distributed process of determining the ODD exit boundary enables a more efficient way to detect the ODD exit. In some aspects and embodiments if any element or parameter is determined to not fulfill the predefined ODD conditions and thus cause the ADS feature to not remain active, then the check may terminate without acquiring further data along the planned route.

In some aspects and embodiments, to check if the ego-vehicle 1 is sufficiently far away (i.e. considering either the distance or time of travel) from the ODD exit than the respective threshold values set by functional requirements, it may be sufficient for the ego-vehicle 1 to find an active ADS ahead of the ego-vehicle to which the ego-vehicle needs to travel a distance and/or time duration larger than the respective threshold values. This approach has an advantage to reduce the amount of communicated information and, hence, providing a more efficient solution.

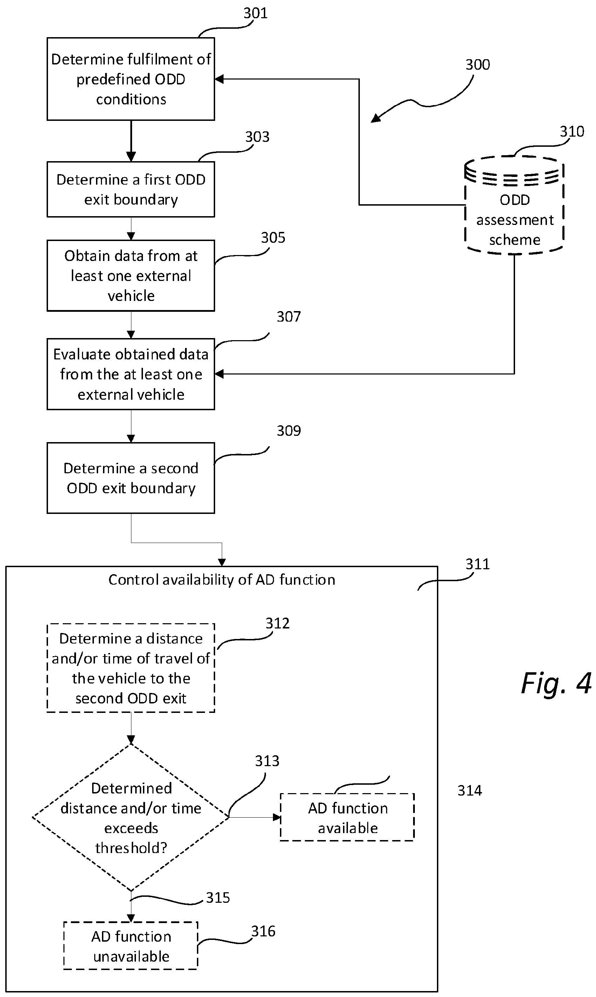

Fig. 4 shows a flow chart of a method 300 according to yet another aspect of the present invention for determining an ODD exit boundary for an ADS feature of an ego-vehicle 1 travelling along an estimated route. All the elements, features, and advantages explained in relation to the other aspects also apply analogously for this aspect of the present invention.

The method 300 comprises determining 301 a fulfilment of a set of predefined Operational Design Domain (ODD) conditions for an Automated Driving System, ADS, feature of an ego-vehicle at least partly based on sensor data obtained from on-board sensors of the ego-vehicle. The method further comprises determining 303 a first ODD exit boundary along an estimated route to be travelled by the ego-vehicle, wherein the first ODD exit boundary is determined at least partly based on one or more geo-spatially static elements along the estimated route. The method further comprises obtaining 305 data from at least one external vehicle located on the estimated route to be travelled by the ego-vehicle, wherein the obtained data comprises information about one or more ADS state parameters of the at least one external vehicle, and optionally, information about one or more ODD parameters in a surrounding environment of the at least one external vehicle. Still further, the method comprises evaluating 307 the obtained data from the at least one external vehicle against an ODD assessment scheme 310 in order to determine a fulfilment of the predefined ODD conditions in the surrounding environment of the external vehicle. The method also comprises determining 309 a second ODD exit boundary along the estimated route of the ego-vehicle based on the evaluation and controlling 311 the ADS feature based on the determined second ODD exit boundary.

As also discussed above, in several embodiments, the method 300 may further comprise determining 312 at least one of a distance between the ego-vehicle and the secondary ODD exit boundary, and a time of travel of the ego-vehicle to the secondary ODD exit boundary. Thus, if the determined distance or if the time of travel exceeds or is equal to 313 i.e. is greater than or equal to a respective predefined threshold distance or a respective predefined threshold time, the step of controlling the ADS feature may comprise making 314 the ADS feature available for activation or activating the ADS feature. Yet further, if the determined distance or if the time of travel does not exceed 315 i.e. is smaller than the respective predefined threshold distance or the respective predefined threshold time, the step of controlling the ADS feature may comprise making 316 the ADS feature unavailable for activation or initiating a de-activation process of the ADS feature.

Executable instructions for performing these functions are, optionally, included in a non-transitory computer-readable storage medium or other computer program product configured for execution by one or more processors.

Fig. 5 is a schematic side view of a vehicle 1 comprising a control system 10 configured to determine an ODD exit boundary for an ADS feature of an ego-vehicle 1 travelling along an estimated route. The vehicle 1 has a driver support function for autonomously maneuvering the vehicle when traveling on a road segment. In some embodiments the driver support function is an ADS function having an automation level 3 or higher according to SAE J3016 levels of driving automation (may also be referred to as an AD feature). The driver support function is capable of operating within a specific Operational Design Domain (ODD) also referred to as predefined ODD conditions.

The vehicle 1 further comprises sensing capabilities such as a perception system 6 as well as a localization system 5. A perception system 6 is in the present context to be understood as a system responsible for acquiring raw sensor data from sensors 6a, 6b, 6c such as cameras, LIDARs and RADARs, ultrasonic sensors, and converting this raw data into scene understanding. The localization system 5 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy. The localization system may comprise or be associated with an HD-map module. An HD-map is in the present context to be understood as map comprising data with highly accurate and realistic representations of the road travelled upon by the vehicle 1. In more detail HD-maps may be understood as maps that are particularly built for autonomous driving purposes. These maps have an extremely high precision, oftentimes at a centimeter-level. Moreover, the maps generally contain information such as where the lanes are, where the road boundaries are, where the curves are, how high the curves are, and so forth.

The control device 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for controlling a vehicle according to any one of the embodiments disclosed herein. The memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuitry 11 is configured to determine a fulfilment of a set of predefined Operational Design Domain, ODD, conditions for an Automated Driving System, ADS, feature of the ego-vehicle 1 at least partly based on sensor data obtained from on-board sensors of the ego-vehicle 6a-6c. The control circuitry 11 is further configured to determine a first ODD exit boundary 101 along an estimated route to be travelled by the ego-vehicle 1, wherein the first ODD exit boundary 101 is determined at least partly based on one or more geo-spatially static elements along the estimated route. The control circuitry is still further configured to obtain data from at least one external vehicle 2, 22, 23 located on the estimated route to be travelled by the ego-vehicle, wherein the obtained data comprises information about one or more ADS state parameters of the at least one external vehicle(s), and optionally, information about one or more ODD parameters in a surrounding environment of the at least one external vehicle. The control circuitry 11 is further configured to evaluate the obtained data from the at least one external vehicle against an ODD assessment scheme in order to determine a fulfilment of the predefined ODD conditions in the surrounding environment of the external vehicle. The control circuitry 11 is further configured to determine a second ODD exit boundary 103 along the estimated route of the ego-vehicle based on the evaluation and control the ADS feature based on the determined second ODD exit boundary.

Further, the vehicle 1 may be connected to external network(s) 20 via for instance a wireless link (e.g. for retrieving map data). The same or some other wireless link may be used to communicate with other at least one external vehicle(s) 2, 22, 23 in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments.

Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the control device 10) may be or include any number of hardware components for conducting data or signal processing or for executing computer code stored in memory 12. The device 10 may have an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the ego-vehicle 1 further comprises a sensor interface 13 which may also provide the possibility to acquire sensor data directly or via dedicated sensor control circuitry 6 in the vehicle. The vehicle 1 also comprises a communication/antenna interface 14 which may further provide the possibility to send output to a remote location (e.g. remote operator or control centre) by means of an antenna 8. Moreover, some sensors in the vehicle may communicate with the control device 10 using a local network setup, such as CAN bus, I2C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to determine if the ODD is fulfilled. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

## Claims

1. A method (300) comprising:
determining (301) a fulfilment of a set of predefined Operational Design Domain, ODD, conditions for an Automated Driving System, ADS, feature of an ego-vehicle at least partly based on sensor data obtained from on-board sensors of the ego-vehicle;
determining (303) a first ODD exit boundary along an estimated route to be travelled by the ego-vehicle, wherein the first ODD exit boundary is determined at least partly based on one or more geo-spatially static elements along the estimated route;
obtaining data (305) from at least one external vehicle located on the estimated route to be travelled by the ego-vehicle, wherein the obtained data comprises information about one or more ADS state parameters of the at least one external vehicle;
evaluating (307) the obtained data from the at least one external vehicle against an ODD assessment scheme in order to determine a fulfilment of the predefined ODD conditions in the surrounding environment of the external vehicle;
if the evaluation indicates that the one or more ADS state parameters of the at least one external vehicle indicate that ADS is inactive and unavailable for activation for the at least one external vehicle, the method further comprises:
determining (309) a second ODD exit boundary along the estimated route of the ego-vehicle by:
determining the second ODD exit boundary along the estimated route of the ego-vehicle based on sensor data obtained from on-board sensors of the ego-vehicle, wherein the sensor data obtained from on-board sensors comprises information about quasi-stationary elements and dynamic elements in the surrounding area of the vehicle, or
determining the second ODD exit boundary along the estimated route of the ego-vehicle based on the evaluation of the obtained data from the at least one external vehicle against the ODD assessment scheme, wherein the obtained data further comprises information about one or more ODD parameters in the surrounding environment of the at least one external vehicle;
controlling (311) the ADS feature based on the determined second ODD exit boundary.

2. The method (300) according to claim 1, wherein the obtained (305) data comprises information about one or more ODD parameters in the surrounding environment of the at least one external vehicle; and
wherein the second ODD exit boundary is the same as the first ODD exit boundary if the evaluation indicates that the set of predefined ODD conditions are fulfilled in the surrounding environment of the external vehicle.

3. The method (300) according to claim 1 or 2, wherein the obtained (305) data comprises information about one or more ODD parameters in the surrounding environment of the at least one external vehicle; and
wherein the second ODD exit boundary is different from the first ODD exit boundary if the evaluation indicates that the set of predefined ODD conditions are not fulfilled in the surrounding environment of the external vehicle.

4. The method (300) according to claim 1, wherein the obtained (305) data comprises information about one or more ADS state parameters of the at least one external vehicle;
wherein the second ODD exit boundary is the same as the first ODD exit boundary if the evaluation indicates that the one or more ADS state parameters of the at least one external vehicle indicate that ADS is active or available for activation for the at least one external vehicle.

5. The method (300) according to any one of claims 1 - 4, the method further comprising:
determining (312) at least one of:
a distance between the ego-vehicle and the secondary ODD exit boundary, and
a time of travel of the ego-vehicle to the secondary ODD exit boundary;
if the determined distance or if the time of travel is equal to or greater than a respective predefined threshold distance or a respective predefined threshold time, the step of controlling (311) the ADS feature comprises:
making (314) the ADS feature available for activation or activating the ADS feature.

6. The method (300) according to claim 5, if the determined (312) distance or if the time of travel is lower than the respective predefined threshold distance or the respective predefined threshold time, the step of controlling (311) the ADS feature comprises:
making (316) the ADS feature unavailable for activation or initiating a de-activation process of the ADS feature.

7. A computer-readable storage medium storing one or more programs configured to be executed by one or more processors of a processing system, the one or more programs comprising instructions for performing the method (300) according to any one of the preceding claims.

8. A system (10) comprising control circuitry (11) configured to:
determine a fulfilment of a set of predefined Operational Design Domain, ODD, conditions for an Automated Driving System, ADS, feature of an ego-vehicle (1) at least partly based on sensor data obtained from on-board sensors (6a, 6b, 6c) of the ego-vehicle;
determine a first ODD exit boundary (101) along an estimated route to be travelled by the ego-vehicle (1), wherein the first ODD exit boundary (101)is determined at least partly based on one or more geo-spatially static elements along the estimated route;
obtain data from at least one external vehicle (2, 22, 23) located on the estimated route to be travelled by the ego-vehicle, wherein the obtained data comprises information about one or more ADS state parameters of the at least one external vehicles;
evaluate the obtained data from the at least one external vehicle against an ODD assessment scheme (310) in order to determine a fulfilment of the predefined ODD conditions in the surrounding environment of the external vehicle;
if the evaluation indicates that the one or more ADS state parameters of the at least one external vehicle indicate that ADS is inactive and unavailable for activation for the at least one external vehicle, the control circuitry (11) is further configured to:
determine a second ODD exit boundary (103) along the estimated route of the ego-vehicle by:
determine the second ODD exit boundary (103) along the estimated route of the ego-vehicle based on sensor data obtained from on-board sensors of the ego-vehicle, wherein the sensor data obtained from on-board sensors comprises information about quasi-stationary elements and dynamic elements in the surrounding area of the vehicle, or
determine the second ODD exit boundary (103) along the estimated route of the ego-vehicle based on the evaluation of the obtained data from the at least one external vehicle against the ODD assessment scheme, wherein the obtained data further comprises information about one or more ODD parameters in the surrounding environment of the at least one external vehicle;
control the ADS feature based on the determined second ODD exit boundary (103).

9. The system (10) according to claim 8, wherein the obtained data comprises information about one or more ODD parameters in the surrounding environment of the at least one external vehicle (1); and
wherein the second ODD exit boundary (103) is the same as the first ODD exit boundary (101) if the evaluation indicates that the set of predefined ODD conditions are fulfilled in the surrounding environment of the external vehicle.

10. The system (10) according to any one of claims 8 or 9, wherein the obtained data comprises information about one or more ODD parameters in the surrounding environment of the at least one external vehicle; and
wherein the second ODD exit boundary (103) is different from the first ODD exit boundary (101) if the evaluation indicates that the set of predefined ODD conditions are not fulfilled in the surrounding environment of the external vehicle.

11. The system (10) according to any one of claims 8 - 10, wherein the obtained data comprises information about one or more ADS state parameters of the at least one external vehicle;
wherein the second ODD exit boundary (103) is the same as the first ODD exit boundary (101) if the evaluation indicates that the one or more ADS state parameters of the at least one external vehicle indicate that ADS is active or available for activation for the at least one external vehicle.

12. The system (10) according to any one of claims 8 - 11, wherein the control circuitry (11) is further configured to:
determine at least one of:
a distance between the ego-vehicle and the secondary ODD exit boundary (103), and
a time of travel of the ego-vehicle to the secondary ODD exit boundary (103);
if the determined distance or if the time of travel is equal to or greater than a respective predefined threshold distance or a respective predefined threshold time, the system further configured to:
make the ADS feature available for activation or activating the ADS feature.

13. The system (10) according to claim 12, wherein if the determined distance or if the time of travel is lower than the respective predefined threshold distance or the respective predefined threshold time, the system further configured to:
make the ADS feature unavailable for activation or initiating a de-activation process of the ADS feature.

14. A vehicle (1) comprising:
an ADS feature for controlling one or more of acceleration, steering, and braking of the vehicle, wherein the ADS feature is associated with an ODD;
one or more on-board sensors (6a, 6b, 6c) for monitoring a surrounding environment of the vehicle;
a communication system for receiving data from an external source;
a system (10) according to claim any one of claims 8 - 13.

## Patentansprüche

1. Verfahren (300), umfassend:
Bestimmen (301) einer Erfüllung eines Satzes von vordefinierten Bedingungen für eine Operational Design Domain, ODD, für ein Merkmal eines automatisierten Fahrsystems, ADS, eines Ego-Fahrzeugs zumindest teilweise basierend auf Sensordaten, die von fahrzeugseitigen Sensoren des Ego-Fahrzeugs erhalten werden;
Bestimmen (303) einer ersten ODD-Austrittsgrenze entlang einer geschätzten Strecke, die durch das Ego-Fahrzeug zurückzulegen ist, wobei die erste ODD-Austrittsgrenze zumindest teilweise basierend auf einem oder mehreren georäumlich statischen Elementen entlang der geschätzten Strecke bestimmt wird;
Erhalten (305) von Daten von mindestens einem externen Fahrzeug, das sich auf der geschätzten Strecke befindet, die durch das Ego-Fahrzeug zurückzulegen ist, wobei die erhaltenen Daten Informationen zu einem oder mehreren ADS-Zustandsparametern des mindestens einen externen Fahrzeugs umfassen;
Auswerten (307) der erhaltenen Daten von dem mindestens einen externen Fahrzeug anhand eines ODD-Bewertungsschemas, um eine Erfüllung der vordefinierten ODD-Bedingungen in der umliegenden Umgebung des externen Fahrzeugs zu bestimmen;
wenn die Auswertung angibt, dass der eine oder die mehreren ADS-Zustandsparameter des mindestens einen externen Fahrzeugs angeben, dass ADS für das mindestens eine externe Fahrzeug inaktiv oder zur Aktivierung nicht verfügbar ist, das Verfahren ferner Folgendes umfasst:
Bestimmen (309) einer zweiten ODD-Austrittsgrenze entlang der geschätzten Strecke des Ego-Fahrzeugs durch Folgendes:
Bestimmen der zweiten ODD-Austrittsgrenze entlang der geschätzten Strecke des Ego-Fahrzeugs basierend auf Sensordaten, die von fahrzeugseitigen Sensoren des Ego-Fahrzeugs erhalten werden, wobei die Sensordaten, die von fahrzeugseitigen Sensoren erhalten werden, Informationen zu quasistationären Elementen und dynamischen Elementen in dem umliegenden Gebiet des Fahrzeugs umfassen, oder
Bestimmen der zweiten ODD-Austrittsgrenze entlang der geschätzten Strecke des Ego-Fahrzeugs basierend auf der Auswertung der erhaltenen Daten von dem mindestens einen externen Fahrzeug anhand des ODD-Bewertungsschemas, wobei die erhaltenen Daten ferner Informationen zu einem oder mehreren ODD-Parametern in der umliegenden Umgebung des mindestens einen externen Fahrzeugs umfassen;
Steuern (311) des ADS-Merkmals basierend auf der bestimmten zweiten ODD-Austrittsgrenze.

2. Verfahren (300) nach Anspruch 1, wobei die erhaltenen (305) Daten Informationen zu einem oder mehreren ODD-Parametern in der umliegenden Umgebung des mindestens einen externen Fahrzeugs umfassen; und
wobei die zweite ODD-Austrittsgrenze die gleiche wie die erste ODD-Austrittsgrenze ist, wenn die Auswertung angibt, dass der Satz von vordefinierten ODD-Bedingungen in der umliegenden Umgebung des externen Fahrzeugs erfüllt ist.

3. Verfahren (300) nach Anspruch 1 oder 2, wobei die erhaltenen (305) Daten Informationen zu einem oder mehreren ODD-Parametern in der umliegenden Umgebung des mindestens einen externen Fahrzeugs umfassen; und
wobei sich die zweite ODD-Austrittsgrenze von der ersten ODD-Austrittsgrenze unterscheidet, wenn die Auswertung angibt, dass der Satz von vordefinierten ODD-Bedingungen in der umliegenden Umgebung des externen Fahrzeugs nicht erfüllt ist.

4. Verfahren (300) nach Anspruch 1, wobei die erhaltenen (305) Daten Informationen zu einem oder mehreren ADS-Zustandsparametern des mindestens einen externen Fahrzeugs umfassen;
wobei die zweite ODD-Austrittsgrenze die gleiche wie die erste ODD-Austrittsgrenze ist, wenn die Auswertung angibt, dass der eine oder die mehreren ADS-Zustandsparameter des mindestens einen externen Fahrzeugs angeben, dass ADS für das mindestens eine externe Fahrzeug aktiv oder zur Aktivierung verfügbar ist.

5. Verfahren (300) nach einem der Ansprüche 1 - 4, wobei das Verfahren ferner Folgendes umfasst:
Bestimmen (312) von mindestens einem von Folgenden:
einer Entfernung zwischen dem Ego-Fahrzeug und der zweiten ODD-Austrittsgrenze und
einer Fahrzeit des Ego-Fahrzeugs zu der zweiten ODD-Austrittsgrenze;
wobei, wenn die bestimmte Entfernung oder wenn die Fahrzeit gleich oder länger als eine jeweilige vordefinierte Schwellenwertentfernung oder eine jeweilige vordefinierte Schwellenwertzeit ist, der Schritt des Steuerns (311) des ADS-Merkmals Folgendes umfasst:
Zurverfügungstellen (314) des ADS-Merkmals zur Aktivierung oder Aktivieren des ADS-Merkmals.

6. Verfahren (300) nach Anspruch 5, wobei, wenn die bestimmte (312) Entfernung oder wenn die Fahrzeit kürzer als die jeweilige vordefinierte Schwellenwertentfernung oder die jeweilige vordefinierte Schwellenwertzeit ist, der Schritt des Steuerns (311) des ADS-Merkmals Folgendes umfasst:
Nichtzurverfügungstellen (316) des ADS-Merkmals zur Aktivierung oder Einleiten eines Deaktivierungsprozesses des ADS-Merkmals.

7. Computerlesbares Speichermedium, das ein oder mehrere Programme speichert, die dazu konfiguriert sind, durch einen oder mehrere Prozessoren eines Verarbeitungssystems ausgeführt zu werden, wobei das eine oder die mehreren Programme Anweisungen zum Durchführen des Verfahrens (300) nach einem der vorhergehenden Ansprüche umfassen.

8. System (10), umfassend eine Steuerschaltung (11), die zu Folgendem konfiguriert ist:
Bestimmen einer Erfüllung eines Satzes von vordefinierten Bedingungen für eine Operational Design Domain, ODD, für ein Merkmal eines automatisierten Fahrsystems, ADS, eines Ego-Fahrzeugs (1) zumindest teilweise basierend auf Sensordaten, die von fahrzeugseitigen Sensoren (6a, 6b, 6c) des Ego-Fahrzeugs erhalten werden;
Bestimmen einer ersten ODD-Austrittsgrenze (101) entlang einer geschätzten Strecke, die durch das Ego-Fahrzeug (1) zurückzulegen ist, wobei die erste ODD-Austrittsgrenze (101) zumindest teilweise basierend auf einem oder mehreren georäumlich statischen Elementen entlang der geschätzten Strecke bestimmt wird;
Erhalten von Daten von mindestens einem externen Fahrzeug (2, 22, 23), das sich auf der geschätzten Strecke befindet, die durch das Ego-Fahrzeug zurückzulegen ist, wobei die erhaltenen Daten Informationen zu einem oder mehreren ADS-Zustandsparametern des mindestens einen externen Fahrzeugs umfassen;
Auswerten der erhaltenen Daten von dem mindestens einen externen Fahrzeug anhand eines ODD-Bewertungsschemas (310), um eine Erfüllung der vordefinierten ODD-Bedingungen in der umliegenden Umgebung des externen Fahrzeugs zu bestimmen;
wenn die Auswertung angibt, dass der eine oder die mehreren ADS-Zustandsparameter des mindestens einen externen Fahrzeugs angeben, dass ADS für das mindestens eine externe Fahrzeug inaktiv oder zur Aktivierung nicht verfügbar ist, die Steuerschaltung (11) ferner zu Folgendem konfiguriert ist:
Bestimmen einer zweiten ODD-Austrittsgrenze (103) entlang der geschätzten Strecke des Ego-Fahrzeugs durch Folgendes:
Bestimmen der zweiten ODD-Austrittsgrenze (103) entlang der geschätzten Strecke des Ego-Fahrzeugs basierend auf Sensordaten, die von fahrzeugseitigen Sensoren des Ego-Fahrzeugs erhalten werden, wobei die Sensordaten, die von fahrzeugseitigen Sensoren erhalten werden, Informationen zu quasistationären Elementen und dynamischen Elementen in dem umliegenden Gebiet des Fahrzeugs umfassen, oder
Bestimmen der zweiten ODD-Austrittsgrenze (103) entlang der geschätzten Strecke des Ego-Fahrzeugs basierend auf der Auswertung der erhaltenen Daten von dem mindestens einen externen Fahrzeug anhand des ODD-Bewertungsschemas, wobei die erhaltenen Daten ferner Informationen zu einem oder mehreren ODD-Parametern in der umliegenden Umgebung des mindestens einen externen Fahrzeugs umfassen;
Steuern des ADS-Merkmals basierend auf der bestimmten zweiten ODD-Austrittsgrenze (103).

9. System (10) nach Anspruch 8, wobei die erhaltenen Daten Informationen zu einem oder mehreren ODD-Parametern in der umliegenden Umgebung des mindestens einen externen Fahrzeugs (1) umfassen; und
wobei die zweite ODD-Austrittsgrenze (103) die gleiche wie die erste ODD-Austrittsgrenze (101) ist, wenn die Auswertung angibt, dass der Satz von vordefinierten ODD-Bedingungen in der umliegenden Umgebung des externen Fahrzeugs erfüllt ist.

10. System (10) nach einem der Ansprüche 8 oder 9, wobei die erhaltenen Daten Informationen zu einem oder mehreren ODD-Parametern in der umliegenden Umgebung des mindestens einen externen Fahrzeugs umfassen; und
wobei sich die zweite ODD-Austrittsgrenze (103) von der ersten ODD-Austrittsgrenze (101) unterscheidet, wenn die Auswertung angibt, dass der Satz von vordefinierten ODD-Bedingungen in der umliegenden Umgebung des externen Fahrzeugs nicht erfüllt ist.

11. System (10) nach einem der Ansprüche 8 - 10, wobei die erhaltenen Daten Informationen zu einem oder mehreren ADS-Zustandsparametern des mindestens einen externen Fahrzeugs umfassen;
wobei die zweite ODD-Austrittsgrenze (103) die gleiche wie die erste ODD-Austrittsgrenze (101) ist, wenn die Auswertung angibt, dass der eine oder die mehreren ADS-Zustandsparameter des mindestens einen externen Fahrzeugs angeben, dass ADS für das mindestens eine externe Fahrzeug aktiv oder zur Aktivierung verfügbar ist.

12. System (10) nach einem der Ansprüche 8 - 11, wobei die Steuerschaltung (11) ferner zu Folgendem konfiguriert ist:
Bestimmen von mindestens einem von Folgenden:
einer Entfernung zwischen dem Ego-Fahrzeug und der zweiten ODD-Austrittsgrenze (103) und
einer Fahrzeit des Ego-Fahrzeugs zu der zweiten ODD-Austrittsgrenze (103);
wenn die bestimmte Entfernung oder wenn die Fahrzeit gleich oder länger als eine jeweilige vordefinierte Schwellenwertentfernung oder eine jeweilige vordefinierte Schwellenwertzeit ist, das System ferner zu Folgendem konfiguriert ist:
Zurverfügungstellen des ADS-Merkmals zur Aktivierung oder Aktivieren des ADS-Merkmals.

13. System (10) nach Anspruch 12, wobei, wenn die bestimmte Entfernung oder wenn die Fahrzeit kürzer als die jeweilige vordefinierte Schwellenwertentfernung oder die jeweilige vordefinierte Schwellenwertzeit ist, das System ferner zu Folgendem konfiguriert ist:
Nichtzurverfügungstellen des ADS-Merkmals zur Aktivierung oder Einleiten eines Deaktivierungsprozesses des ADS-Merkmals.

14. Fahrzeug (1), umfassend:
ein ADS-Merkmal zum Steuern eines oder mehrerer von Folgenden:
Beschleunigung, Lenkung und Bremsen des Fahrzeugs, wobei das ADS-Merkmal mit einem ODD assoziiert ist;
einen oder mehrere fahrzeugseitige Sensoren (6a, 6b, 6c) zum Überwachen einer umliegenden Umgebung des Fahrzeugs;
Kommunikationssystem zum Empfangen von Daten von einer externen Quelle;
System (10) nach einem der Ansprüche 8 - 13.

## Revendications

1. Procédé (300) comprenant :
la détermination (301) de la réalisation d'un ensemble de conditions prédéfinies de domaine de conception opérationnelle, ODD, pour une caractéristique de système de conduite automatisé, ADS, d'un égo-véhicule au moins en partie sur la base de données de capteur obtenues à partir de capteurs embarqués de l'égo-véhicule ;
la détermination (303) d'une première limite de sortie ODD le long d'un itinéraire estimé à parcourir par l'égo-véhicule, la première limite de sortie ODD étant déterminée au moins en partie sur la base d'un ou plusieurs éléments géo-spatialement statiques le long de l'itinéraire estimé ;
l'obtention de données (305) à partir d'au moins un véhicule externe situé sur l'itinéraire estimé à parcourir par l'égo-véhicule, les données obtenues comprenant des informations sur un ou plusieurs paramètres d'état ADS de l'au moins un véhicule externe ;
l'évaluation (307) des données obtenues à partir de l'au moins un véhicule externe par rapport à un schéma d'évaluation ODD afin de déterminer une satisfaction des conditions ODD prédéfinies dans l'environnement immédiat du véhicule externe ;
si l'évaluation indique que les un ou plusieurs paramètres d'état ADS de l'au moins un véhicule externe indiquent que l'ADS est inactif et indisponible pour l'activation pour l'au moins un véhicule externe, le procédé comprend en outre :
la détermination (309) d'une deuxième limite de sortie ODD le long de l'itinéraire estimé de l'égo-véhicule en :
déterminant la deuxième limite de sortie ODD le long de l'itinéraire estimé de l'égo-véhicule sur la base de données de capteur obtenues à partir de capteurs embarqués de l'égo-véhicule, les données de capteur obtenues à partir de capteurs embarqués comprenant des informations sur des éléments quasi-stationnaires et des éléments dynamiques dans la zone environnante du véhicule, ou
déterminant la deuxième limite de sortie ODD le long de l'itinéraire estimé de l'égo-véhicule sur la base de l'évaluation des données obtenues à partir de l'au moins un véhicule externe par rapport au schéma d'évaluation ODD, les données obtenues comprenant en outre des informations sur un ou plusieurs paramètres ODD dans l'environnement environnant de l'au moins un véhicule externe ;
le contrôle (311) de la fonction ADS sur la base de la deuxième limite de sortie ODD déterminée.

2. Procédé (300) selon la revendication 1, dans lequel les données obtenues (305) comprennent des informations sur un ou plusieurs paramètres ODD dans l'environnement environnant de l'au moins un véhicule externe ; et
dans lequel la deuxième limite de sortie ODD est la même que la première limite de sortie ODD si l'évaluation indique que l'ensemble des conditions ODD prédéfinies sont remplies dans l'environnement environnant du véhicule externe.

3. Procédé (300) selon la revendication 1 ou 2, dans lequel les données obtenues (305) comprennent des informations sur un ou plusieurs paramètres ODD dans l'environnement environnant de l'au moins un véhicule externe ; et
dans lequel la deuxième limite de sortie ODD est différente de la première limite de sortie ODD si l'évaluation indique que l'ensemble de conditions ODD prédéfinies n'est pas rempli dans l'environnement environnant du véhicule externe.

4. Procédé (300) selon la revendication 1, dans lequel les données obtenues (305) comprennent des informations sur un ou plusieurs paramètres d'état ADS de l'au moins un véhicule externe ;
dans lequel la deuxième limite de sortie ODD est la même que la première limite de sortie ODD si l'évaluation indique que les un plusieurs paramètres d'état ADS de l'au moins un véhicule externe indiquent que l'ADS est actif ou disponible pour l'activation pour l'au moins un véhicule externe.

5. Procédé (300) selon l'une quelconque des revendications 1 à 4, le procédé comprenant en outre :
la détermination (312) d'au moins l'un des éléments suivants :
une distance entre l'égo-véhicule et la limite de sortie ODD secondaire, et un temps de trajet de l'égo-véhicule jusqu'à la limite de sortie ODD secondaire ;
si la distance déterminée ou si le temps de parcours est égal ou supérieur à une distance seuil prédéfinie respective ou à un temps seuil prédéfini respectif, l'étape de contrôle (311) de la fonction ADS comprend l'étape consistant à :
rendre (314) la fonctionnalité ADS disponible pour l'activation ou activer la fonctionnalité ADS.

6. Procédé (300) selon la revendication 5, si la distance déterminée (312) ou si le temps de parcours est inférieur à la distance seuil prédéfinie respective ou au temps seuil prédéfini respectif, l'étape de contrôle (311) de la fonction ADS comprend l'étape consistant à :
rendre (316) la fonctionnalité ADS indisponible pour l'activation ou lancer un processus de désactivation de la fonctionnalité ADS.

7. Support de stockage lisible par ordinateur stockant un ou plusieurs programmes configurés pour être exécutés par un ou plusieurs processeurs d'un système de traitement, les un ou plusieurs programmes comprenant des instructions pour exécuter le procédé (300) selon l'une quelconque des revendications précédentes.

8. Système (10) comprenant un circuit de commande (11) configuré pour :
déterminer la réalisation d'un ensemble de conditions prédéfinies du domaine de conception opérationnelle, ODD, pour une caractéristique du système de conduite automatisé, ADS, d'un égo-véhicule (1) au moins en partie sur la base de données de capteur obtenues à partir de capteurs embarqués (6a, 6b, 6c) de l'égo-véhicule ;
déterminer une première limite de sortie ODD (101) le long d'un itinéraire estimé à parcourir par l'égo-véhicule (1), la première limite de sortie ODD (101) étant déterminée au moins en partie sur la base d'un ou plusieurs éléments géo-spatialement statiques le long de l'itinéraire estimé ;
obtenir des données à partir d'au moins un véhicule externe (2, 22, 23) situé sur l'itinéraire estimé à parcourir par l'égo-véhicule, les données obtenues comprenant des informations sur un ou plusieurs paramètres d'état ADS de l'au moins un véhicule externe ;
évaluer les données obtenues à partir de l'au moins un véhicule externe par rapport à un schéma d'évaluation ODD (310) afin de déterminer une satisfaction des conditions ODD prédéfinies dans l'environnement environnant du véhicule externe ;
si l'évaluation indique que les un ou plusieurs paramètres d'état ADS de l'au moins un véhicule externe indiquent que l'ADS est inactif et indisponible pour l'activation pour l'au moins un véhicule externe, le circuit de commande (11) est en outre configuré pour
déterminer une deuxième limite de sortie ODD (103) le long de l'itinéraire estimé de l'ego-véhicule en :
déterminant la deuxième limite de sortie ODD (103) le long de l'itinéraire estimé de l'égo-véhicule sur la base de données de capteur obtenues à partir de capteurs embarqués de l'égo-véhicule, les données de capteur obtenues à partir de capteurs embarqués comprenant des informations sur des éléments quasi-stationnaires et des éléments dynamiques dans la zone environnante du véhicule, ou
déterminant la deuxième limite de sortie ODD (103) le long de l'itinéraire estimé de l'égo-véhicule sur la base de l'évaluation des données obtenues à partir de l'au moins un véhicule externe par rapport au schéma d'évaluation ODD, les données obtenues comprenant en outre des informations sur un ou plusieurs paramètres ODD dans l'environnement environnant de l'au moins un véhicule externe ;
contrôler la fonction ADS sur la base de la deuxième limite de sortie ODD déterminée (103).

9. Système (10) selon la revendication 8, dans lequel les données obtenues comprennent des informations sur un ou plusieurs paramètres ODD dans l'environnement environnant de l'au moins un véhicule externe (1) ; et
dans lequel la deuxième limite de sortie ODD (103) est la même que la première limite de sortie ODD (101) si l'évaluation indique que l'ensemble de conditions ODD prédéfinies est rempli dans l'environnement environnant du véhicule externe.

10. Système (10) selon l'une quelconque des revendications 8 ou 9, dans lequel les données obtenues comprennent des informations sur un ou plusieurs paramètres ODD dans l'environnement environnant de l'au moins un véhicule externe ; et
dans lequel la deuxième limite de sortie ODD (103) est différente de la première limite de sortie ODD (101) si l'évaluation indique que l'ensemble de conditions ODD prédéfinies n'est pas rempli dans l'environnement environnant du véhicule externe.

11. Système (10) selon l'une quelconque des revendications 8 à 10, dans lequel les données obtenues comprennent des informations sur un ou plusieurs paramètres d'état ADS de l'au moins un véhicule externe ;
dans laquelle la deuxième limite de sortie ODD (103) est la même que la première limite de sortie ODD (101) si l'évaluation indique que les un ou plusieurs paramètres d'état ADS de l'au moins un véhicule externe indiquent que l'ADS est actif ou disponible pour l'activation pour l'au moins un véhicule externe.

12. Système (10) selon l'une quelconque des revendications 8 à 11, dans lequel le circuit de commande (11) est en outre configuré pour :
déterminer au moins l'un des éléments suivants :
une distance entre l'égo-véhicule et la limite de sortie ODD secondaire (103), et
un temps de trajet de l'ego-véhicule jusqu'à la limite de sortie ODD secondaire (103) ;
si la distance déterminée ou si le temps de parcours est égal ou supérieur à une distance seuil prédéfinie respective ou à un temps seuil prédéfini respectif, le système est en outre configuré pour :
rendre la fonctionnalité ADS disponible pour l'activation ou activer la fonctionnalité ADS.

13. Système (10) selon la revendication 12, dans lequel si la distance déterminée ou si le temps de trajet est inférieur à la distance seuil prédéfinie respective ou au temps seuil prédéfini respectif, le système est en outre configuré pour :
rendre la fonctionnalité ADS indisponible pour l'activation ou lancer un processus de désactivation de la fonctionnalité ADS.

14. Véhicule (1) comprenant :
une fonction ADS permettant de contrôler une ou plusieurs parmi l'accélération, la direction et le freinage du véhicule, la fonction ADS étant associée à un ODD ;
un ou plusieurs capteurs embarqués (6a, 6b, 6c) pour surveiller un environnement environnant du véhicule ;
un système de communication permettant de recevoir des données provenant d'une source externe ;
un système (10) selon l'une quelconque des revendications 8 à 13.
